# EUROPEAN PATENT SPECIFICATION

(11) **EP 4 173 684 B1**
(45) Date of publication and mention of the grant of the patent: **14.08.2024**
(21) Application number: 22205048.6
(22) Date of filing: 02.11.2022
(51) Int. Cl.: A63F 13/24, A63F 13/22

(54) **GAME CONTROLLER WITH ADJUSTABLE TRIGGER THROW LENGTH**
SPIELSTEUERUNG MIT EINSTELLBARER ABZUGSLÄNGE
CONTRÔLEUR DE JEU AVEC LONGUEUR DE COURSE DE DÉCLENCHEMENT RÉGLABLE

(30) Priority: 02.11.2021 US 202163274600 P; 01.11.2022 US 202217978367
(43) Date of publication of application: 03.05.2023
(73) Proprietor: Panda Hardware LLC, Spring House, Pennsylvania 19477 (US)
(72) Inventor: SAMPERI, Matthew, Lansdale, 19002 (US)
(74) Representative: Purdylucey Intellectual Property

(56) References cited:
- EP-A1- 3 074 101
- EP-A2- 3 019 257
- EP-A2- 3 380 207
- WO-A1-2016/191010
- WO-A1-2016/200552
- CN-U- 206 881 102
- FR-A1- 3 020 762
- US-A1- 2011 240 454
- US-A1- 2012 322 555
- US-A1- 2016 144 275
- US-A1- 2019 042 007
- US-A1- 2020 306 626

## Description

### Related Application (Priority Claim)

The present application claims the benefit of United States Provisional Application Serial No. 63/274,600, filed November 2, 2021.

### Background

The present invention generally relates to game controllers, and more specifically relates to a game controller having a trigger button that has an adjustable throw length.

Throw length is defined as the total distance a trigger button on a game controller needs to move in order to be fully pressed.

Trigger buttons on game controllers have an analog and/or a digital input.

With regard to an analog input, typically a linear analog slider potentiometer is used, wherein the analog input varies depending on how far the trigger button is pressed. More specifically, the throw length typically allows for a range of analog input values (usually 0-255).

On the other hand, with regard to a digital input, the input is only activated when the trigger button is fully depressed.

Sometimes a user will want to have a shorter trigger throw length because they want to be able to activate the digital input without needing to press the button as far.

A typical game controller is not configured to provide that the throw length of a trigger button on the game controller is adjustable. Therefore, to achieve this on a typical game controller, a user would have to open the game controller and add either some material or one or more inserts into the controller, i.e., within the trigger button.

Most game controllers are not configured to be easily opened. As such, a user risks damaging the game controller when the user opens the game controller in an attempt to adjust the throw length of one or more of the trigger buttons by adding either some material or one or more inserts into the controller.

An adjustable game controller trigger assembly is known from US 2016/0144275 A1.

### Summary

One object of an embodiment of the present invention is to provide a game controller having a trigger button that has an adjustable throw length.

Another object of an embodiment of the present invention is to provide a game controller having a trigger button that has a throw length that can be adjusted without opening the controller.

Still another object of an embodiment of the present invention is to provide a game controller having a trigger button that has a throw length that can be adjusted from outside the game controller.

Still yet another object of an embodiment of the present invention is to provide a game controller having a trigger button that has a throw length that can be adjusted from outside the game controller using a tool.

Briefly, an embodiment of the present invention provides a game controller which comprises a trigger button. The trigger button comprises a rotatable member that is user accessible from outside the game controller. The rotatable member is threadably engaged with a translatable member that is disposed within the game controller. User rotation of the rotatable member causes the translatable member to translate within the trigger button, thereby adjusting the throw length of the trigger button.

### Brief Description of the Drawings

The organization and manner of the structure and operation of the invention, together with further objects and advantages thereof, may best be understood by reference to the following description taken in connection with the accompanying drawings wherein like reference numerals identify like elements in which:
Figure 1 provides an exterior view of a trigger button of a game controller, where the trigger button is in accordance with an embodiment of the present invention;
Figure 2 is similar to Figure 1, but shows inside a trigger assembly;
Figure 3 is a cross-sectional view of the trigger button shown in Figures 1 and 2;
Figures 4 and 5 are side cross-sectional views of the trigger button shown in Figure 1;
Figure 6 is an exploded perspective view of the trigger button shown in Figure 1; and
Figure 7 is similar to Figure 6, but shows the components in cross-section.

### Description

While this invention may be susceptible to embodiment in different forms, there is shown in the drawings and will be described herein in detail, a specific embodiment with the understanding that the present disclosure is to be considered an exemplification of the principles of the invention and is not intended to limit the invention to that as illustrated.

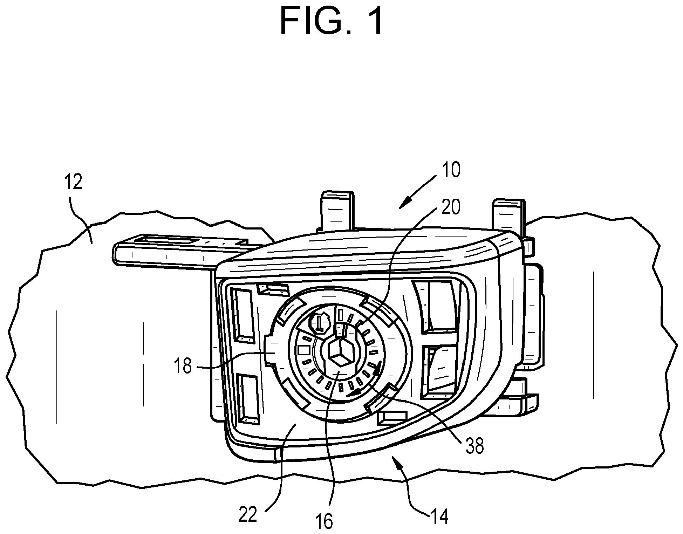

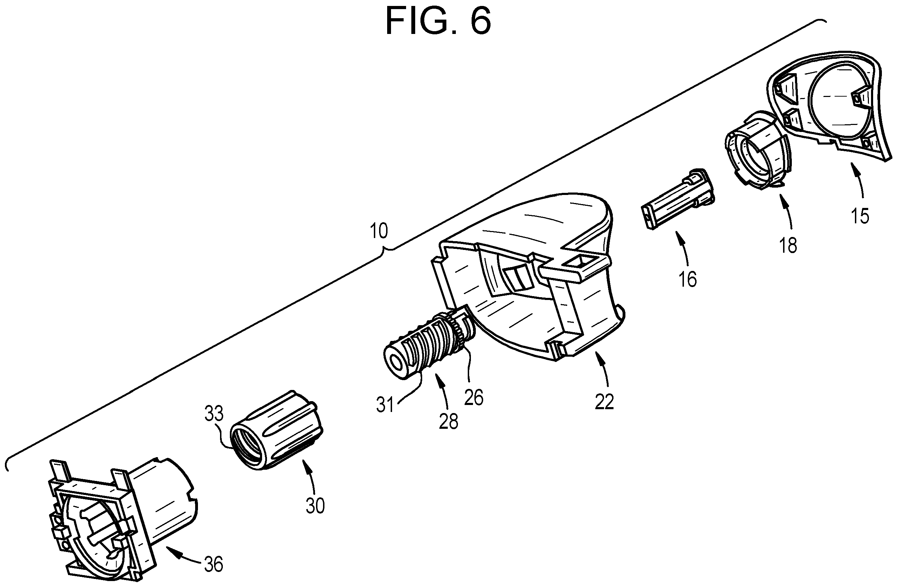

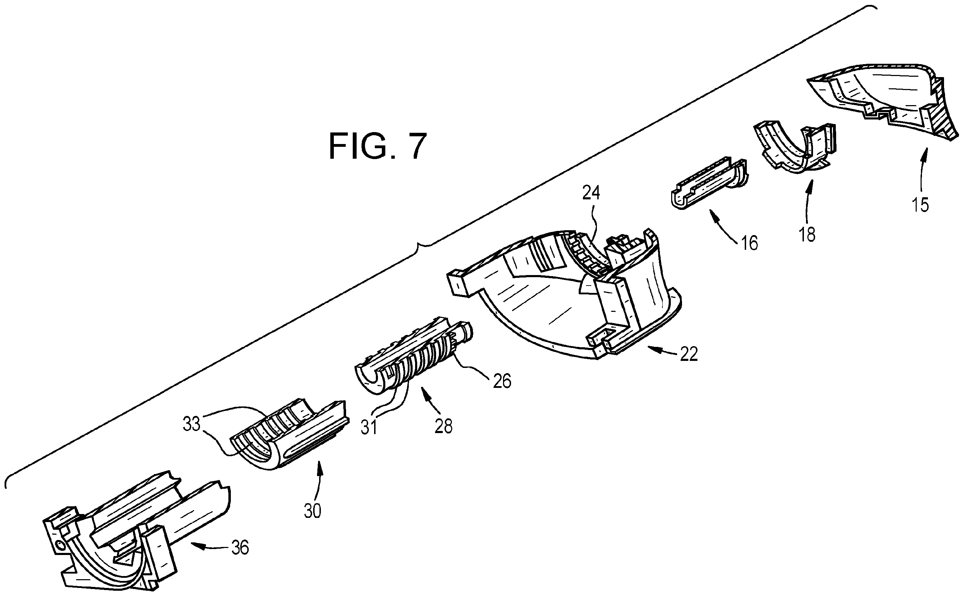

Figure 1 provides an exterior view of a trigger button 10 of a game controller 12, where the trigger button 10 is in accordance with an embodiment of the present invention. Specifically, Figure 1 shows the exterior of a trigger assembly 14 after a cap 15 (See Figures 6 and 7) has been removed. The cap 15 is what the user touches when pushing down on the trigger button 10. As shown, once the cap is removed, preferably a user interface 16 is exposed. The user interface 16 allows the user to adjust the throw length of the trigger button 10. While Figure 1 shows the user interface 16 as being an insert for receiving a hex wrench, still other forms of the user interface 16 can be used while still staying within the scope of the present invention. For example, the user interface 16 could instead be a twist knob, a button, a switch, or any other standard user input interface.

As shown, the trigger button 10 includes a retention plate 18 and the retention plate 18 may have indicia 20 thereon relating to the throw length and the position (i.e., rotational setting) of the user interface 16.

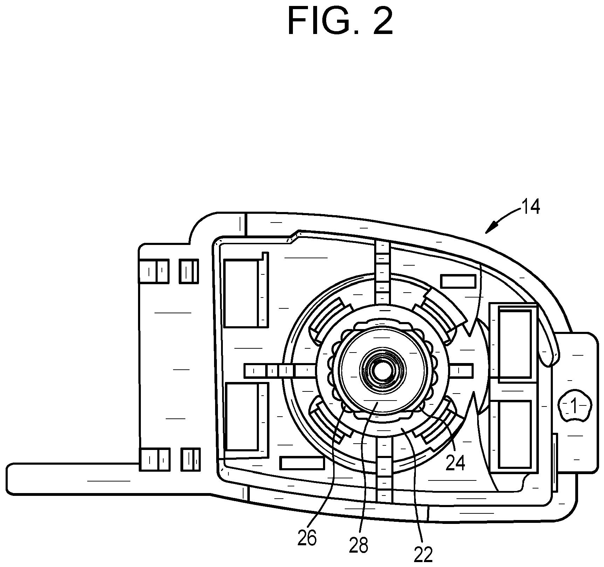

Figure 2 is similar to Figure 1 but shows inside the trigger assembly 14 (i.e., inside the trigger enclosure 22). The trigger enclosure 22 preferably comprises teeth 24, such as female teeth, and these teeth 24 are configured to engage corresponding teeth 26, such as male teeth, on a rotatable member such as an inner adjuster 28. In other words, the teeth 24, 26 of the two components collectively act as a gear that provides that the inner adjuster 28 can rotate relative to the trigger enclosure 22 but does not translate relative to the trigger enclosure 22 when rotated. The user interface 16 shown in Figure 1 is preferably provided in contact with the inner adjuster 28 such that the user can interact with the inner adjuster 28 and rotate the inner adjuster 28 in order to adjust the throw length of the trigger button 10.

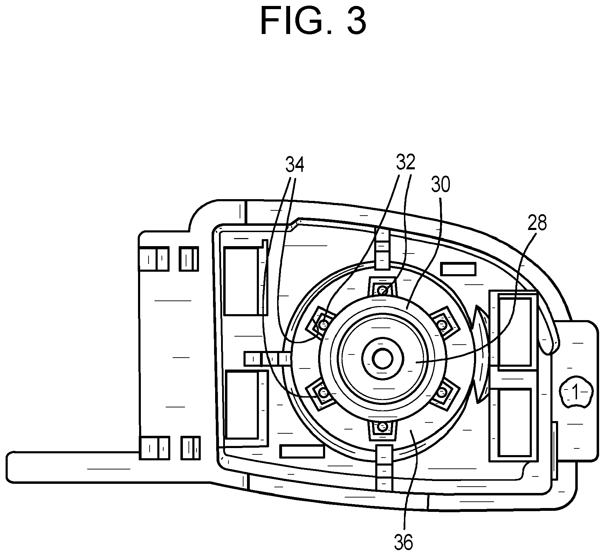

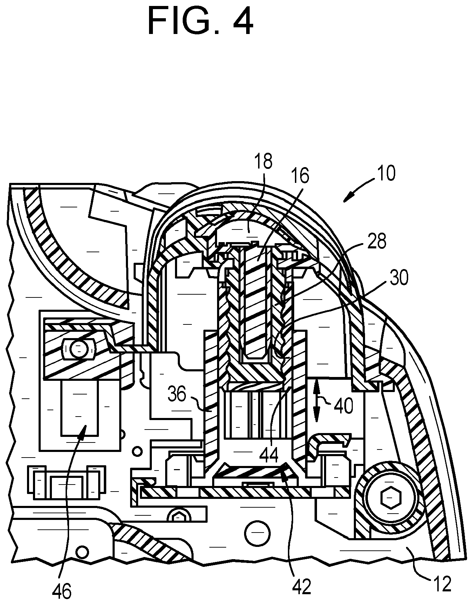

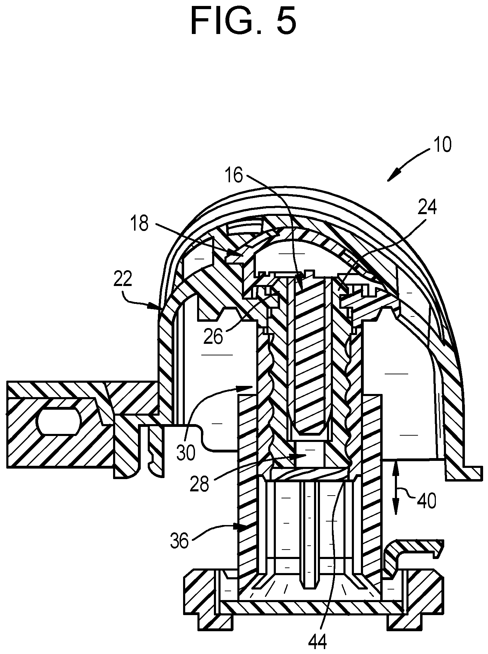

As shown in Figures 3-5, in addition to being engaged with the trigger enclosure 22, the inner adjuster 28 is preferably in threaded engagement with an outer adjuster 30 (via external thread 31 on inner adjuster 28 (see Figures 6 and 7) interacting with internal thread 33 on outer adjuster 30 (See Figure 7)), and preferably the outer adjuster 30 includes one or more, such as six (6), wings 32 (see Figure 3) that effectively key into corresponding slots 34 that are provided in a tube 36 that is disposed inside the trigger enclosure 22. The engagement between the wings 32 on the outer adjuster 30 and the slots 34 in the tube 36 provides that when the inner adjuster 28 is rotated by a user (as indicated by arrow 38 in Figure 1), the outer adjuster 30 does not rotate but instead translates either up or down within the tube 36 (as indicated by arrow 40 in Figures 4 and 5), i.e., up or down depending on which direction the user rotates the inner adjuster 28 via the user interface 16.

As shown in Figure 4, preferably at the bottom of the trigger button 10, preferably at the bottom of the tube 36, sits a digital trigger input 42, such as a rubberized conductive pad. The more a user rotates the inner adjuster 28 (via the user interface 16) in one direction causing the outer adjuster 30 to translate closer to the digital trigger input 42, the less of a distance the trigger button 10 will need to be pushed for the bottom 44 of the outer adjuster 30 to contact and push down on the digital trigger input 42. Conversely, the more a user rotates the inner adjuster 28 (via the user interface 16) in the other direction causing the outer adjuster 30 to translate further away from the digital trigger input 42, the more of a distance the trigger button 10 will need to be pushed for the bottom 44 of the outer adjuster 30 to contact and push down on the digital trigger input 42. As such, rotation of the inner adjuster 28 in either direction (via the user interface 16) adjusts the throw length of the trigger button 10.

As also shown in Figure 4, preferably the trigger enclosure 22 is connected to, or otherwise in communication with, a linear analog slider potentiometer 46 or some other appropriate analog measuring device. As such, the trigger button 10 is configured to provide a digital input (using the digital trigger input 42) as well as an analog input (using the linear analog slider potentiometer 46).

As shown in Figures 4 and 5, the outer adjuster 30 is disposed inside the tube 36 and ultimately gets pushed down into the tube 36 when a user pushes on the trigger button 10. Preferably, the trigger button 10 is configured to be biased outward (i.e., away from a pushed down position) by one or more springs (not shown). As shown, the inner adjuster 28 preferably extends into (and, as previously discussed, is in threaded engagement with) the outer adjuster 30. As discussed above, the inner adjuster 28 is also in a gear-like engagement with the trigger enclosure 22.

Due to the engagement of the inner adjuster 28 with the trigger enclosure 22, the inner adjuster 28 does not translate when rotated by the user interacting with the user interface 16. Due to the threaded engagement of the inner adjuster 28 with the outer adjuster 30, and due to the one or more wings 32 of the outer adjuster 30 (see Figure 3) being engaged with the one or more slots 34 in the tube 36, rotation of the inner adjuster 28 (via the user interface 16) causes the outer adjuster 30 to translate either up or down in the tube 36. The position of the bottom 44 of the outer adjuster 30 relative to the digital trigger input 42 at the bottom of the trigger button 10 effectively defines the throw length.

The embodiment of the present invention disclosed herein allows for a user to modify the throw length of the trigger button 10 from the outside of the main controller assembly 12. The advantage of this is that the user does not need to open a controller which most of the time is not made to be opened, possibly damaging the controller, and add something not originally intended for the controller on the inside of it. Instead, the user can customize the throw length from the outside of the controller.

With regard to assembly, the inner adjuster 28 is snapped into a center hole of the trigger enclosure 22. When the inner adjuster 28 snaps in, the inner adjuster 28 becomes fixed translationally, but the inner adjuster 28 can be rotated inside the trigger enclosure 22. When the inner adjuster 28 rotates inside the trigger enclosure 22, the gear teeth engagement between the trigger enclosure 22 and the inner adjuster 28 prevent inadvertent rotation. In other words, the gear teeth engagement prevents inadvertent rotation of the inner adjuster 28 unless enough force is intentionally applied to the user interface 16.

The user interface 16 (such as a hex wrench interface) is then inserted into the inner adjuster 28, which is held in place by the retention plate 18 which is snapped into the trigger enclosure 22 after the user interface 16 is fully inserted. The inner thread 33 of outer adjuster 30 is then threaded onto the outer thread 31 of the inner adjuster 28. As discussed above, the outer adjuster 30 has one or more, such as six (6), twist locking wings 32 along its outer diameter. When fully assembled, the outer adjuster 30 slides inside the tube 36, where it is locked from rotating by the corresponding slots 34 in the tube 36 in which the wings 32 are sitting.

In operation, when the user rotates the user interface 16 (such as by inserting a hex wrench into the user interface 16 and rotating the hex wrench), there will be some resistance from the teeth 26 of the inner adjuster 28 pressing against the teeth 24 of the trigger enclosure 22. Once this resistance is overcome, the inner adjuster 28 rotates to the next tooth of the trigger enclosure 22. The rotation of the inner adjuster 28 causes the outer adjuster 30 to move linearly along the inside of the tube 36 because the outer adjuster 30 is rotationally locked inside the tube 36 and the outer adjuster 30 is connected to the inner adjuster 28 by threads. The linear change in location of the outer adjuster 30 either shortens or lengthens the distance between the bottom 44 of the outer adjuster 30 and the digital trigger input 42. As such, the total distance the bottom 44 of the outer adjuster 30 needs to travel before it hits the digital trigger input 42 (i.e., the throw length) is adjusted.

While a specific embodiment of the invention has been shown and described, it is envisioned that those skilled in the art may devise various modifications without departing from the scope of the present invention as defined in the appended claims.

## Claims

1. A game controller (12) comprising a trigger button (10) having a throw length, said trigger button comprising a rotatable member (28) that is user accessible from outside the game controller, said trigger button comprising a translatable member (30) that is disposed within the game controller, wherein the rotatable member is threadably engaged with the translatable member, wherein rotation of the rotatable member causes the translatable member to translate within the trigger button, thereby adjusting the throw length of the trigger button.

2. A game controller as recited in claim 1, wherein the trigger button comprises a trigger assembly and a removable cap over the trigger assembly.

3. A game controller as recited in claim 1, wherein the trigger button comprises a user interface, wherein the user interface is configured to provide adjustability of the throw length of the trigger button.

4. A game controller as recited in claim 3, wherein the user interface comprises a hex wrench insert.

5. A game controller as recited in claim 3, wherein the trigger button comprises a retention plate having indicia thereon, wherein the indicia relates to a rotational setting of the user interface.

6. A game controller as recited in claim 1, wherein trigger button comprises a trigger enclosure, wherein the trigger enclosure comprises teeth which engage corresponding teeth on the rotatable member.

7. A game controller as recited in claim 6, wherein trigger button comprises an inner adjuster, wherein the teeth of the trigger enclosure and rotatable member collectively act as a gear that provides that the inner adjuster rotates relative to the trigger enclosure but does not translate relative to the trigger enclosure when rotated.

8. A game controller as recited in claim 7, wherein the user interface is in contact with the inner adjuster, wherein interaction with the inner adjuster rotates the inner adjuster in order to adjust the throw length of the trigger button.

9. A game controller as recited in claim 8, wherein the trigger button further comprises an outer adjuster, wherein the inner adjuster is in threaded engagement with the outer adjuster.

10. A game controller as recited in claim 9, wherein the outer adjuster comprises a plurality of wings that key into corresponding slots in a tube disposed inside the trigger enclosure.

11. A game controller as recited in claim 10, wherein engagement between the wings on the outer adjuster and the slots in the tube provides that when the inner adjuster is rotated, the outer adjuster does not rotate but instead translates either up or down within the tube depending on a direction of rotation of the inner adjuster via the user interface.

12. A game controller as recited in claim 1, wherein the trigger button comprises a digital trigger input and is in communication with an analog measuring device, wherein the trigger button provides a digital input as well as an analog input.

13. A game controller as recited in claim 1, wherein the trigger button is biased outward by at least one spring.

14. A game controller as recited in claim 9, wherein the inner adjuster extends into the outer adjuster.

15. A game controller as recited in claim 7, wherein the inner adjuster snaps into a center hole of the trigger enclosure, wherein the inner adjuster is fixed translationally but is rotatable inside the trigger enclosure.

## Patentansprüche

1. Gamecontroller (12), umfassend eine Auslösertaste (10) mit einer Hublänge, wobei die Auslösertaste ein drehbares Element (28) umfasst, das von außerhalb des Gamecontrollers für den Benutzer zugänglich ist, wobei die Auslösertaste ein verschiebbares Element (30) umfasst, das innerhalb des Gamecontrollers angeordnet ist, wobei das drehbare Element über ein Gewinde mit dem verschiebbaren Element in Eingriff steht, wobei eine Drehung des drehbaren Elements bewirkt, dass sich das verschiebbare Element innerhalb der Auslösertaste verschiebt, wodurch die Hublänge der Auslösertaste justiert wird.

2. Gamecontroller nach Anspruch 1, wobei die Auslösertaste eine Auslöserbauguppe und eine abnehmbare Kappe über der Auslöserbaugruppe umfasst.

3. Gamecontroller nach Anspruch 1, wobei die Auslösertaste eine Benutzerschnittselle umfasst, wobei die Benutzerschnittstelle dafür gestaltet ist, eine Justierbarkeit der Hublänge der Auslösertaste bereitzustellen.

4. Gamecontroller nach Anspruch 3, wobei die Benutzerschnittstelle einen Inbusschlüsseleinsatz umfasst.

5. Gamecontroller nach Anspruch 3, wobei die Auslösertaste eine Halteplatte mit Zeichen darauf umfasst, wobei sich die Zeichen auf eine Dreheinstellung der Benutzerschnittstelle beziehen.

6. Gamecontroller nach Anspruch 1, wobei die Auslösertaste eine Auslösereinfassung umfasst, wobei die Auslösereinfassung Zähne umfasst, die mit entsprechenden Zähnen an dem drehbaren Element in Eingriff stehen.

7. Gamecontroller nach Anspruch 6, wobei die Auslösertaste eine innere Justierung umfasst, wobei die Zähne der Auslösereinfassung und des drehbaren Elements zusammen als ein Getriebe fungieren, das dafür sorgt, dass sich die innere Justierung, wenn sie gedreht wird, im Verhältnis zu der Auslösereinfassung dreht, aber sich im Verhältnis zu der Auslösereinfassung nicht verschiebt.

8. Gamecontroller nach Anspruch 7, wobei die Benutzerschnittstelle in Kontakt mit der inneren Justierung steht, wobei eine Interaktion mit der inneren Justierung die innere Justierung dreht, um die Hublänge der Auslösertaste zu justieren.

9. Gamecontroller nach Anspruch 8, wobei die Auslösertaste ferner eine äußere Justierung umfasst, wobei die innere Justierung über ein Gewinde in Eingriff mit der äußeren Justierung steht.

10. Gamecontroller nach Anspruch 9, wobei die äußere Justierung mehrere Flügel umfasst, die sich in entsprechenden Schlitzen in einer Röhre verankern, die im Inneren der Auslösereinfassung angeordnet ist.

11. Gamecontroller nach Anspruch 10, wobei der Eingriff zwischen den Flügeln an der äußeren Justierung und den Schlitzen in der Röhre dafür sorgt, dass bei Drehung der inneren Justierung sich die äußere Justierung nicht dreht, sondern sich stattdessen innerhalb der Röhre entweder nach oben oder nach unten verschiebt, je nach einer Richtung der Drehung der inneren Justierung über die Benutzerschnittstelle.

12. Gamecontroller nach Anspruch 1, wobei die Auslösertaste eine digitale Auslösereingabe umfasst und mit einer analogen Messvorrichtung in Verbindung steht, wobei die Auslösertaste eine digitale Eingabe sowie eine analoge Eingabe bereitstellt.

13. Gamecontroller nach Anspruch 1, wobei die Auslösertaste durch mindestens eine Feder nach außen hin vorgespannt ist.

14. Gamecontroller nach Anspruch 9, wobei sich die innere Justierung in die äußere Justierung erstreckt.

15. Gamecontroller nach Anspruch 7, wobei die innere Justierung in eine mittige Öffnung der Auslösereinfassung einrastet, wobei die innere Justierung im Hinblick auf eine Verschiebung fixiert ist, aber im Inneren der Auslösereinfassung drehbar ist.

## Revendications

1. Contrôleur de jeu (12) comprenant un bouton de déclenchement (10) présentant une longueur de course, ledit bouton de déclenchement comprenant un élément rotatif (28) qui est accessible par l'utilisateur depuis l'extérieur du contrôleur de jeu, ledit bouton de déclenchement comprenant un élément translatable (30) qui est disposé à l'intérieur du contrôleur de jeu, dans lequel l'élément rotatif est en prise filetée avec l'élément translatable, dans lequel une rotation de l'élément rotatif amène l'élément translatable à translater à l'intérieur du bouton de déclenchement, réglant ainsi la longueur de course du bouton de déclenchement.

2. Contrôleur de jeu selon la revendication 1, dans lequel le bouton de déclenchement comprend un ensemble de déclenchement et un capuchon amovible sur l'ensemble de déclenchement.

3. Contrôleur de jeu selon la revendication 1, dans lequel le bouton de déclenchement comprend une interface utilisateur, dans lequel l'interface utilisateur est configurée pour fournir une aptitude au réglage de la longueur de course du bouton de déclenchement.

4. Contrôleur de jeu selon la revendication 3, dans lequel l'interface utilisateur comprend un insert de clé Allen.

5. Contrôleur de jeu selon la revendication 3, dans lequel le bouton de déclenchement comprend une plaque de retenue présentant des repères sur celle-ci, dans lequel les repères se rapportent à un réglage en rotation de l'interface utilisateur.

6. Contrôleur de jeu selon la revendication 1, dans lequel le bouton de déclenchement comprend une enceinte de déclenchement, dans lequel l'enceinte de déclenchement comprend des dents qui entrent en prise avec des dents correspondantes sur l'élément rotatif.

7. Contrôleur de jeu selon la revendication 6, dans lequel le bouton de déclenchement comprend un dispositif de réglage interne, dans lequel les dents de l'enceinte de déclenchement et de l'élément rotatif agissent collectivement comme un engrenage qui permet au dispositif de réglage interne de tourner par rapport à l'enceinte de déclenchement mais de ne pas translater par rapport à l'enceinte de déclenchement une fois en rotation.

8. Contrôleur de jeu selon la revendication 7, dans lequel l'interface utilisateur est en contact avec le dispositif de réglage interne, dans lequel une interaction avec le dispositif de réglage interne fait tourner le dispositif de réglage interne afin de régler la longueur de course du bouton de déclenchement.

9. Contrôleur de jeu selon la revendication 8, dans lequel le bouton de déclenchement comprend en outre un dispositif de réglage externe, dans lequel le dispositif de réglage interne est en prise filetée avec le dispositif de réglage externe.

10. Contrôleur de jeu selon la revendication 9, dans lequel le dispositif de réglage externe comprend une pluralité d'ailes qui saisissent des fentes correspondantes dans un tube disposé à l'intérieur de l'enceinte de déclenchement.

11. Contrôleur de jeu selon la revendication 10, dans lequel une entrée en prise entre les ailes sur le dispositif de réglage externe et les fentes dans le tube permettent que lorsque le dispositif de réglage interne est mis en rotation, le dispositif de réglage externe ne tourne pas mais translate soit vers le haut soit vers le bas à l'intérieur du tube en fonction d'une direction de rotation du dispositif de réglage interne par le biais de l'interface utilisateur.

12. Contrôleur de jeu selon la revendication 1, dans lequel le bouton de déclenchement comprend une entrée de déclenchement numérique et est en communication avec un dispositif de mesure analogique, dans lequel le bouton de déclenchement fournit une entrée numérique ainsi qu'une entrée analogique.

13. Contrôleur de jeu selon la revendication 1, dans lequel le bouton de déclenchement est sollicité vers l'extérieur par au moins un ressort.

14. Contrôleur de jeu selon la revendication 9, dans lequel le dispositif de réglage interne s'étend dans le dispositif de réglage externe.

15. Contrôleur de jeu selon la revendication 7, dans lequel le dispositif de réglage interne se loge dans un trou central de l'enceinte de déclenchement, dans lequel le dispositif de réglage interne est fixé en translation mais est rotatif à l'intérieur de l'enceinte de déclenchement.
